# EUROPEAN PATENT SPECIFICATION

(11) **EP 1 612 080 B1**
(45) Date of publication and mention of the grant of the patent: **12.08.2009**
(21) Application number: 05013444.4
(22) Date of filing: 22.06.2005
(51) Int. Cl.: B60K 17/04, F16H 47/00

(54) **Hydrostatic mechanical power splitting transmission**
Hydrostatisch-mechanisches Leistungsverzweigungsgetriebe
Transmission hydrostatique-mécanique à division de puissance

(30) Priority: 29.06.2004 GB 0414457
(43) Date of publication of application: 04.01.2006
(73) Proprietor: AGCO GmbH, 87616 Marktoberdorf (DE)
(72) Inventor: Heindl, Richard, 87616 Marktoberdorf (DE)
(74) Representative: Morrall, Roger

(56) References cited:
- EP-B- 0 902 213
- DE-A1- 4 022 049
- DE-A1- 4 235 728
- DE-A1- 19 933 822
- GB-A- 2 254 898
- US-A- 4 019 600

## Description

The present invention relates to a hydrostatic-mechanical power splitting transmission which includes a mechanical power branch and a hydrostatic power branch including a hydrostatic unit which is arranged in an outer housing of the transmission. The hydrostatic unit is supported by a first supporting element and by a second supporting element. The first supporting element is oriented transversely with respect to a driving shaft and a driven shaft of the transmission. The first supporting element is supported in the outer housing of the transmission. The first supporting element is designed to support the weight and the reaction torque of the transmission.

Such power splitting transmissions are well known for use in such vehicles as agricultural tractors. An example of such a transmission is shown in German patent application DE 40 22 049 A1 which discloses a hydrostatic-mechanical power splitting transmission according to the preamble of claim 1. The bars are supported in bores of the outer housing of the transmission by damping elements. The support of the transmission on the bars is at two spaced apart locations such that each bar is not only subjected to half the weight, but also to half of the reaction torque of the transmission. In this way, special torque support (as necessary in a transmission described in German patent application DE 42 35 728 A1) is not required, but nevertheless the support of the transmission is complicated. In addition, it has to be taken into account that the hydraulic oil used in such transmissions reaches very high temperatures and thus has to be cooled. This may be realized by continually withdrawing a part of the hydraulic oil from the oil circuit and by returning the hydraulic oil into the hydrostatic unit after filtration and cooling. The manner in which the hydraulic oil is withdrawn from the hydrostatic unit and returned into the hydrostatic unit is described in, for example, European patent EP 0 902 213 B1. European patent EP 0 902 213 B1 discloses a torque support which is centrally located between two bearings of the hydrostatic unit located one at each end of the units. A pipe socket which is fixedly connected to the housing of the hydrostatic unit is supported on a portion which is fixedly connected to the housing of the transmission by an elastic sleeve. The hydraulic oil may be withdrawn from or returned into the hydrostatic unit via a bore located in the pipe socket. Consequently, continuous feeding and withdrawing of hydraulic oil is not possible.

It is the object of the invention to improve a power splitting transmission of the kind described above in particular with regard to its support in the housing of the transmission and the improved supply and removal of hydraulic oil to and from the hydrostatic unit.

This object is achieved by arranging that the first supporting element supports the hydrostatic unit on the housing of the transmission closer to a plane which is vertical in use and which contains the centre of gravity of the hydrostatic unit and is parallel to the first element than the second supporting element so the first supporting element supports a greater proportion of the weight of the hydrostatic unit than the second supporting element, that the second supporting element is orientated generally parallel to the driving and driven shafts of the transmission so that the second supporting element does not support reaction torque, and that the hydrostatic unit is designed to be supplied with hydraulic oil and/or lubricating oil via the second supporting element.

Due to the fact that the first supporting element supports the hydrostatic unit from the housing of the transmission closer to the above vertical plane containing the centre of gravity of the hydrostatic unit, the first supporting element accomplishes the support of the weight and of the reaction torque of the hydrostatic unit from the housing of the transmission substantially by itself. Consequently, the first supporting element may be optimally adapted to the forces and torques occurring during operation of the transmission. Thus, it is easy to determine and calculate the load of the respective components involved in the support of the hydrostatic unit. Along therewith, there is low structural expenditure since over dimensioning of these components resulting in unnecessary costs is thus prevented. In contrast thereto, the second supporting element is subjected to negligibly low portions of the weight and to no reaction torques of the hydrostatic unit. The very small relative movement of the hydrostatic unit with respect to the second supporting element and thus with respect to the housing of the transmission makes it possible to continuously withdraw hydraulic oil from and to return hydraulic oil to the unit after its cooling by two oil conduits which are located in the second supporting element.

Additional advantageous, details and embodiments of the invention are disclosed in the dependent claims.

A (per se known) detail of the invention is seen in the fact that the first supporting element is formed by a rod which supported in the housing of the transmission by damping elements. In this way, insertion and removal of the hydrostatic unit into and out off the housing of the transmission is significantly simplified since, for example during insertion, only one rod has to be connected to the housing of the hydrostatic unit to securely support the hydrostatic unit.

With respect to the support of the hydrostatic unit at the second supporting element, it is proposed that a round stud of the housing of the hydrostatic unit is supported at the second supporting element, the stud substantially extending in the direction of the driving shaft and of the driven shaft of the hydrostatic unit, and that feeding/discharge of hydraulic oil and of lubricating oil and/or control oil, respectively, to/from the hydrostatic unit takes place through bores which are located in said stud. Due to the low load supported by the second supporting element, the stud may be designed to have a very small diameter. Its outer diameter is only limited by the diameter of the bores which extend therein. Assembly and detachment of the hydrostatic unit into and out off the housing of the transmission is very simple since the stud only has to be coupled to the second supporting element by a longitudinal displacement of the hydrostatic as it is lowered into the housing of the transmission. One simultaneously attains an oil-tight connection of the two bores in the stud with the two oil conduits in the second supporting element before the first supporting element, in the form of the rod, is also moved to reach its desired supporting position.

Due to the proposal of using a stud which is designed as one piece with the housing of the hydrostatic unit, the structural expenditure for realising an oil-tight connection between the second supporting bearing and the hydrostatic unit may be kept low.

An especially simple solution for realising an oil-tight connecting location between the bores which are located in the stud and the oil conduits in the second supporting element is a design in which one of the bores ends at the front of the stud and the other bore ends in the surrounding outer surface area of the stud and that both bores are separated from each other by a seal.

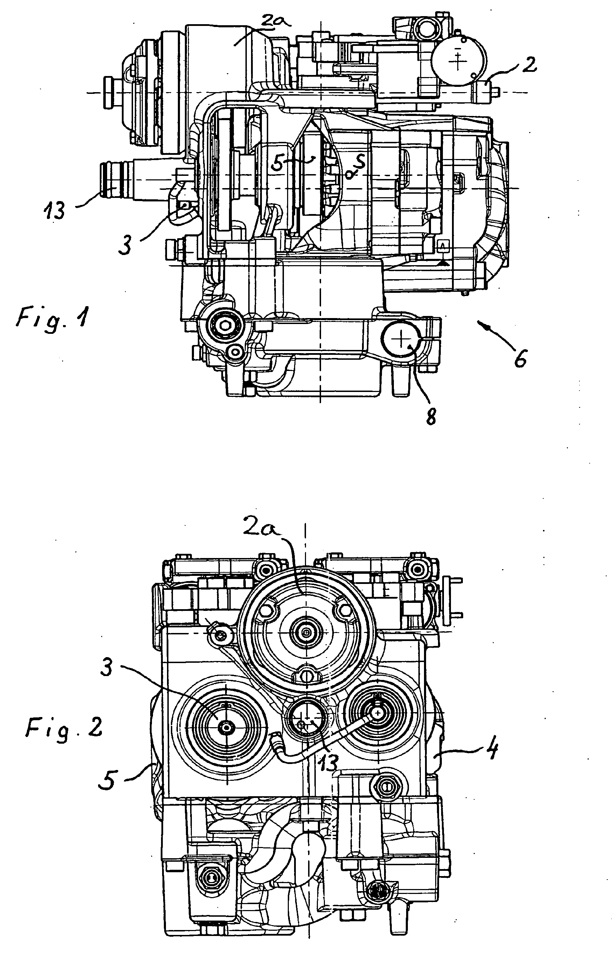

The invention will now be described in greater detail, by way of example only, with reference to drawings in which:-
Fig. 1 illustrates a view of a power splitting transmission unit in a direction perpendicular to its inlet shaft and its outlet shaft,
Fig. 2 illustrates a side view of the transmission unit according to Fig. 1,

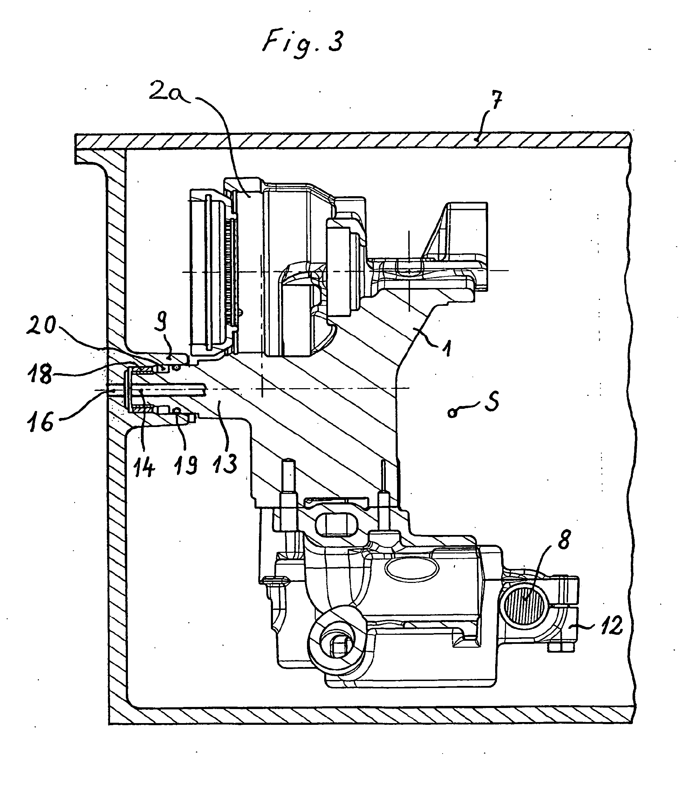

Fig. 3 illustrates a part sectional view of a housing of the hydrostatic unit which forms part of the transmission of Fig. 1, and

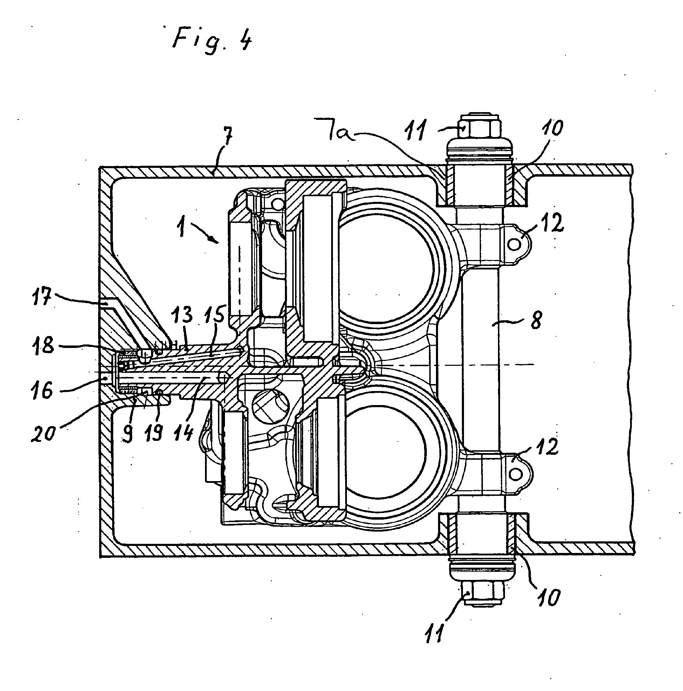

Fig. 4 illustrates a part sectional view of the housing of the hydrostatic unit of Fig. 3 from above.

The power splitting transmission according to the invention includes a housing 1 including transmission elements for the division of the power of the motor connected to a drive shaft 2 into a hydraulic branch and into a mechanical branch, as takes place in such transmissions. The housing 1 also includes the transmission elements (for example epicyclic gearing 2a) required for the summation of the power of the hydraulic branch and of the mechanical branch of the transmission as well as the hydrostatic units which form the hydraulic branch of the transmission. Due to the fact that the aforementioned transmission elements are of no importance to the present invention, they are not illustrated in the drawings, and they are not explained in greater detail herein. Only the driven shaft 3 of the power division transmission which carries the (summed) entire power is illustrated.

The components illustrated in the drawings are mainly hydrostatic units which form part of the hydraulic branch of the transmission in which the hydraulic power is transmitted by means of an infinitely variable pump 4 connected with an infinitely variable hydraulic motor 5. These hydrostatic units and their controls are located in the common housing 1 which is called the hydrostatic unit 6 hereinafter.

The hydrostatic unit 6 is located in an outer housing 7 of the transmission which form part of the customary chassis of the tractor. The housing 7 is accessible by an opening which is located in the upper portion and which is closed by a cover when the transmission is in use. Inside of the housing of the transmission, the hydrostatic unit 6 is supported on a first supporting element 8 which is designed as a rod and on a second supporting element 9.

The first supporting element 8 is supported at its end portions in bores 7a formed in the walls of the outer housing 7 of the transmission by vibration damping elements 10. The first supporting element 8 extends in a transverse direction with respect to the longitudinal axes of the drive shaft 2 and of the driven shaft 3. The pretension with which the damping elements 10 are fixed in the bores 7a to attain the desired damping effect may be adjusted by nuts 11 which are screwed on to threads which are located at the ends of the first supporting element 8. The hydrostatic unit 6 is supported by the first supporting element 8 at two places which are spaced apart at a preferably great distance. For this purpose, the housing 1 of unit 6 includes two bores supporting the rod, the bores being designed as a clamping connection 12. In this way, the first supporting element 8 is capable of supporting the reaction torque of the hydrostatic unit 6 during operation, and to transfer it into the housing 7 of the transmission. The first supporting element 8 is located closer to a vertical plane extending through the centre of gravity S of the hydrostatic unit 6 and is parallel to the element 8 than the second supporting element 9 so that the first supporting element 8 supports a great portion of the weight of the hydrostatic unit 6 than the second supporting element 9.

The second supporting element 9 is an integrated part of a wall of the housing 7 of the transmission, and it is designed as a portion of the housing into which an elongated stud-like portion13 of the housing 1 is designed to extend. Two bores 14, 15 are arranged in the stud 13. These bores 14 and 15 extend longitudinal of the stud and are connected to the pump 4 and the motor 5. The bore 14 ends at the front of the stud 13, and it is connected to the exit of an oil cooler (not illustrated) by an oil feed conduit 16 in the second supporting element 9. The bore 15 ends in a circumferential channel 20 of the stud 13 which is sealed by seals 18, 19, and it is connected to the entrance of the oil cooler by an oil discharge conduit 17 in the second supporting element 9. In this way, hot hydraulic oil which is continuously removed from the hydraulic circuit of the pump 4 and motor 5 may be returned into the hydraulic circuit after cooling. Due to the fact that only negligibly low radial loads and no reaction torque are transmitted between the stud 13 and the second supporting element 9, the seal 17 is only statically loaded such that there is no danger of negative effects with respect to the working life of this sealing location.

## Claims

1. A hydrostatic-mechanical power splitting transmission, comprising:
a hydrostatic unit (6), the hydrostatic unit (6) being arranged in a housing (7) of the transmission, the hydrostatic unit (6) being supported at a first supporting element (8) and at a second supporting element (9), the first supporting element (8) being oriented transversely with respect to a driving shaft (2) and a driven shaft (3) of the transmission, the first supporting element (8) being supported on the housing (7) of the transmission and being designed to support the weight and the reaction torque of the hydrostatic unit (6), **characterised in that** the first supporting element (8) supports the hydrostatic unit (6) on the housing (7) of the transmission closer to a plane which is vertical in use and which contains the centre of gravity (S) of the hydrostatic unit and is parallel to the first element than the second supporting element (9) so the first supporting element (8) supports a greater proportion of the weight of the hydrostatic unit (6) than the second supporting element (9), that the second supporting element (9) is orientated generally parallel to the driving (2)and driven (3) shafts of the transmission so that the second supporting element does not support reaction torque, and that the hydrostatic unit (6) is designed to be supplied with hydraulic oil and/or lubricating oil via the second supporting element (9).

2. A transmission according to claim 1, **characterised in that** the first supporting element (8) is formed by a rod which is supported at spaced locations in the housing (7) of the transmission by means of damping elements (10).

3. A transmission according to claims 1 or 2, **characterised in that** a projecting stud (13) of the housing (1) of said hydrostatic unit (6) is supported at the second supporting element (9), the stud (13) extending generally parallel to the driving (2) and driven (3) shafts of the hydrostatic unit (6), and that feeding/discharge of hydraulic oil and of lubricating oil and/or control oil, respectively, to/from the hydrostatic unit (6) takes place through bores (14, 15) which are located in the stud (13).

4. A transmission according to any one of claims 1 to 3, **characterised in that** the stud (13) is designed as one piece with said housing (1) of the hydrostatic unit (6).

5. A transmission according to claim 3 or 4, characterise in that one (14) of the bores (14, 15) ends at the front of the stud and the other bore (15) ends in the surrounding surface area of the stud (13), and that the bores (14, 15) are separated from each other by a seal (18).

## Patentansprüche

1. Hydrostatisch-mechanisches Getriebe mit Leistungsverzweigung mit:
einer hydrostatischen Einheit (6), die in einem Gehäuse (7) des Getriebes angeordnet ist und über ein erstes abstützendes Element (8) und ein zweites abstützendes Element (9) abgestützt ist, wobei das erste abstützende Element (8) transversal zu einer antreibenden Welle (2) und einer angetriebenen Welle (3) des Getriebes angeordnet ist und an dem Gehäuse (7) des Getriebes abgestützt ist und geeignet gestaltet ist, um das Gewicht und das Reaktionsmoment der hydrostatischen Einheit (6) abzustützen, **dadurch gekennzeichnet, dass** das erste abstützende Element (8) die hydrostatische Einheit (6) an dem Gehäuse (7) des Getriebes dichter zu einer Ebene, die im Gebrauch vertikal orientiert ist und den Schwerpunkt (S) der hydrostatischen Einheit beinhaltet und parallel zu dem ersten Element orientiert ist, als das zweite abstützende Element (9) abgestützt ist, so dass das erste abstützende Element (8) einen größeren Anteil des Gewichts der hydrostatischen Einheit (6) abstützt als das zweite abstützende Element (9), dass das zweite abstützende Element (9) grundsätzlich parallel zu der antreibenden Welle (2) und der angetriebenen Welle (3) des Getriebes orientiert ist, so dass das zweite abstützende Element das Reaktionsmoment nicht abstützt, und dass die hydrostatische Einheit (6) geeignet gestaltet ist, so dass diese mit hydraulischem Öl und/oder schmierendem Öl über das zweite abstützende Element (9) versorgt werden kann.

2. Getriebe nach Anspruch 1, **dadurch gekennzeichnet, dass** das erste abstützende Element (8) durch eine Stange gebildet ist, die mittels dämpfenden Elementen (10) an beabstandeten Orten in dem Gehäuse (7) des Getriebes abgestützt ist.

3. Getriebe nach Anspruch 1 oder 2, **dadurch gekennzeichnet, dass** ein vorstehender Zapfen, Stift oder Bolzen (13) des Gehäuses (1) der hydrostatischen Einheit (6) bei dem zweiten abstützenden Element (9) abgestützt ist, wobei sich der Zapfen, Stift oder Bolzen (13) grundsätzlich parallel zu der antreibenden Welle (2) und der angetriebenen Welle (3) der hydrostatischen Einheit (6) erstreckt, und dass das Versorgen und/oder Ableiten hydraulischen Öls, schmierenden Öls und/oder steuernden oder regelnden Öls von und/oder zu der hydrostatischen Einheit (6) durch Bohrungen (14, 15) erfolgt, die in dem Zapfen, Stift oder Bolzen (13) angeordnet sind.

4. Getriebe nach einem der Ansprüche 1 bis 3, **dadurch gekennzeichnet, dass** der Zapfen, Stift oder Bolzen (13) einstückig mit dem Gehäuse (1) der hydrostatischen Einheit (6) ausgebildet ist.

5. Getriebe nach Anspruch 3 oder 4, **dadurch gekennzeichnet, dass** eine Bohrung (14) der Bohrungen (14, 15) an der Vorderseite oder dem vorderen Ende des Zapfens, Stifts oder Bolzens endet und die andere Bohrung (15) in dem umgebenden Oberflächenbereich , Stirnflächenbereich oder Mantelflächenbereich des Zapfens, Stifts oder Bolzens (13) endet und dass die Bohrungen (14, 15) durch ein Dichtelement (18) voneinander getrennt sind.

## Revendications

1. Transmission hydrostatique-mécanique à division de puissance, comprenant :
une unité hydrostatique (6), l'unité hydrostatique (6) étant agencée dans un carter (7) de la transmission, l'unité hydrostatique (6) étant supportée à l'endroit d'un premier élément de support (8) et d'un deuxième élément de support (9), le premier élément de support (8) étant orienté transversalement par rapport à un arbre d'entraînement (2) et un arbre entraîné (3) de la transmission, le premier élément de support (8) étant supporté sur le carter (7) de la transmission et étant conçu pour supporter le poids et le couple de réaction de l'unité hydrostatique (6), **caractérisée en ce que** le premier élément de support (8) supporte l'unité hydrostatique (6) sur le carter (7) de la transmission plus près d'un plan qui est vertical en utilisation et qui contient le centre de gravité (S) de l'unité hydrostatique et qui est parallèle au premier élément que le deuxième élément de support (9), de sorte que le premier élément de support (8) supporte une plus grande proportion du poids de l'unité hydrostatique (6) que le deuxième élément de support (9), **en ce que** le deuxième élément de support (9) est orienté sensiblement parallèlement aux arbres d'entraînement (2) et entraîné (3) de la transmission de sorte que le deuxième élément de support ne supporte pas de couple de réaction, et **en ce que** l'unité hydrostatique (6) est conçue pour être alimentée en huile hydraulique et/ou lubrifiante via le deuxième élément de support (9).

2. Transmission selon la revendication 1, **caractérisée en ce que** le premier élément de support (8) est constitué par une tige qui est supportée à des endroits espacés dans le carter (8) de la transmission au moyen d'éléments amortisseurs (10).

3. Transmission selon la revendication 1 ou 2, **caractérisée en ce qu'**une broche en saillie (13) du carter (1) de la dite unité hydrostatique (6) est supportée à l'endroit du deuxième élément de support (9), la broche (13) s'étendant sensiblement parallèlement aux arbres d'entraînement (2) et entraîné (3) de l'unité hydrostatique (6), et **en ce que** l'alimentation / l'évacuation d'huile hydraulique et d'huile lubrifiante et/ou d'huile de commande, respectivement, à destination / en provenance de l'unité hydrostatique (6) ont lieu à travers des trous (14, 15) qui sont situés dans la broche (13).

4. Transmission selon une quelconque des revendications 1 à 3, **caractérisée en ce que** la broche (13) est conçue de façon monobloc avec le dit carter (1) de l'unité hydrostatique (6).

5. Transmission selon la revendication 3 ou 4, **caractérisée en ce qu'**un (14) des trous (14, 15) se termine à l'avant de la broche et l'autre trou (15) se termine dans la surface d'entourage de la broche (13), et **en ce que** les trous (14, 15) sont séparés l'un de l'autre par une étanchéité (18).
